(19) Europäisches Patentamt
European Patent Office
Office européen des brevets

(11) EP 4 076 985 B1

(12) # FASCICULE DE BREVET EUROPEEN

(45) Date de publication et mention de la délivrance du brevet:
**08.07.2026 Bulletin 2026/28**

(21) Numéro de dépôt: **20845579.0**

(22) Date de dépôt: **14.12.2020**

(51) Classification Internationale des Brevets (IPC):
***B60C 1/00*** (2006.01) ***C08K 3/04*** (2006.01)
***C08K 3/06*** (2006.01) ***C08K 3/22*** (2006.01)
***C08K 3/36*** (2006.01) ***C08K 5/1535*** (2006.01)
***B60C 9/00*** (2006.01)

(52) Classification Coopérative des Brevets (CPC):
(C-Sets disponibles)
**B60C 1/0041; B60C 1/00; B60C 9/0007; C08K 3/04; C08K 3/06; C08K 3/22; C08K 3/36; C08K 5/1535;** B60C 2001/0066; B60C 2009/0021; C08K 2003/2206; C08K 2003/222 (Cont.)

(86) Numéro de dépôt international:
**PCT/FR2020/052424**

(87) Numéro de publication internationale:
**WO 2021/123587 (24.06.2021 Gazette 2021/25)**

(54) **PRODUIT RENFORCE A BASE D'AU MOINS UN ELEMENT DE RENFORT METALLIQUE ET D'UNE COMPOSITION DE CAOUTCHOUC**

GEHÄRTETES PRODUKT ENTHALTEND MINDESTENS EINEM METALLHÄRTUNGSELEMENT UND EINER KAUTSCHUKZUSAMMENSETZUNG

HARDENED PRODUCT COMPRISING AT LEAST ONE METAL HARDENING ELEMENT AND A RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2019 FR 1914448**

(43) Date de publication de la demande:
**26.10.2022 Bulletin 2022/43**

(73) Titulaire: **COMPAGNIE GENERALE DES ETABLISSEMENTS MICHELIN**
**63000 Clermont-Ferrand (FR)**

(72) Inventeurs:
- **BARBOUTEAU, Joël**
  **63040 CLERMONT-FERRAND Cedex 9 (FR)**
- **MAYER, Sylvain**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 3 167 110**
**US-A- 3 903 026**
**US-A- 5 859 101**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC):
(Cont.)

C-Sets
**C08K 3/04, C08L 21/00;**
**C08K 3/06, C08L 21/00;**
**C08K 3/22, C08L 21/00;**
**C08K 3/36, C08L 21/00;**
**C08K 5/1535, C08L 21/00**

## Description

### Domaine technique de l'invention

La présente invention est relative au domaine des produits en caoutchouc renforcés, en particulier à destination des bandages pneumatiques ou non pneumatiques, ainsi qu'aux articles comprenant de tels produits renforcés.

### Art antérieur

Les nappes de renforcement des bandages pneumatiques ou des articles renforcés en caoutchouc comprennent habituellement une composition de caoutchouc, dite de calandrage, et des câbles de renforcement textiles ou métalliques. Ces nappes étant soumises à des contraintes importantes lors du roulage des pneumatiques, notamment du fait de conditions de roulage pouvant être particulièrement sévères, par exemple sous une atmosphère humide et corrosive, on comprend qu'elles doivent posséder une endurance élevée, en particulier vis-à-vis du phénomène de séparation ou fissuration des extrémités des couches croisées dans la zone "d'épaule" du pneumatique, problème connu sous le terme de "clivage". Cette condition exige notamment des compositions de caoutchouc entrant dans la constitution des ceintures des pneumatiques qu'elles présentent une résistance très élevée à la propagation des fissures et à la thermo-oxydation et des propriétés à rupture adaptées.

De nombreux travaux ont été réalisés par les manufacturiers de bandages pneumatiques pour améliorer une ou plusieurs de ces performances, notamment par l'ajout d'additifs aux compositions de caoutchouc. Ainsi, Le document US 5,859,101 décrit une composition pour pneumatique comprenant de 0,05 à 5 pce d'un composé sélectionné parmi l'acide ascorbique et ses dérivés, le tocophérol, l'acide citrique et ses dérivés permettant d'améliorer la résistance à l'abrasion, la résistance à la fissuration et la résistance en fatigue de compositions de caoutchouc pouvant être utilisées en compositions de calandrage. Ce document n'aborde pas la problématique de l'adhésion à des éléments de renfort.

Le document EP3167110 divulgue des câbles gommés in-situ dans lesquels la composition de caoutchouc comprend un anti-oxydant tel que l'acide ascorbique afin d'améliorer la pérennité de l'adhésion de la composition sur le renfort métallique sans dégrader l'adhésion initiale.

Le document US3903026 enseigne que l'ajout d'oxyde de magnésium dans une composition comprenant un carboxylate de cobalt permet d'améliorer l'adhésion à un renfort métallique revêtu de zinc ou d'un alliage de zinc. Les propriétés à rupture des compositions ne sont pas évoquées.

Poursuivant ses recherches, la demanderesse a découvert qu'une composition de caoutchouc comprenant un composé ascorbate et un métal alcalino-terreux présentait à la fois des propriétés d'adhésion, et de résistance à la propagation de fissures améliorées lorsque la composition était utilisée en calandrage d'un élément de renfort métallique, sans dégrader les propriétés à rupture.

### Description détaillée de l'invention

L'invention concerne un produit renforcé, un article fini ou semi-fini et un bandage pneumatique ou non pneumatique tels que définis dans les revendications 1 à 15.

### Définitions

Par l'expression "à base de", il faut entendre un produit ou une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; le produit ou la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les composés comprenant du carbone mentionnés dans la description peuvent être d'origine fossile ou biosourcée. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

**Produit renforcé**

Le produit renforcé selon l'invention est à base d'au moins un élément de renfort métallique et d'une composition de caoutchouc à base d'au moins un élastomère diénique, une charge renforçante et un système de réticulation à base de soufre, la composition de caoutchouc comprenant au moins un métal alcalino-terreux et un composé ascorbate de formule générale (I) :

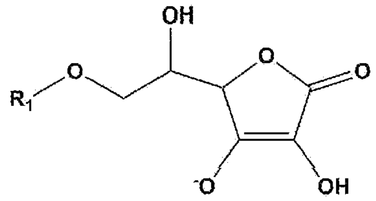

(I)

dans laquelle $R_1$ représente un atome d'hydrogène H, ou un groupe choisi parmi les groupes alkyles comprenant de 1 à 18 atomes de carbone, les groupes alkylecarbonyles et alcényles comprenant de 2 à 18 atomes de carbone et les groupes alcénylcarbonyles comprenant de 3 à 18 atomes de carbone, la composition de caoutchouc présentant une teneur en composé ascorbate au moins égale 0,5 pce et un ratio molaire composé ascorbate sur métal alcalino-terreux allant de 0,7 à 2,5.

Par groupe alcényle, on entend un groupe hydrocarboné monovalent comprenant au moins une insaturation. Par groupe carbonyle, on entend un groupe divalent -CO-.

<u>Ascorbate et métal alcalino-terreux</u>

La composition de caoutchouc du produit renforcé selon l'invention comprend au moins un métal alcalino-terreux et un composé ascorbate de formule générale (I), et présente une teneur en composé ascorbate de formule générale (I) au moins égale 0,5 pce et un ratio molaire composé ascorbate de formule générale (I) sur métal alcalino-terreux allant de 0,7 à 2,5.

Par métal alcalino-terreux on entend un métal choisi dans le groupe constitué par le bérillium, le magnésium, le calcium, le strontium, le baryum et le radium.

Le ratio molaire composé ascorbate sur métal alcalino-terreux dans la composition de caoutchouc va de 0,7 à 2,5. En association avec les autres caractéristiques de l'invention, un ratio molaire inférieur à 0,7 conduit à une tenue adhésive plus faible, tandis qu'un ratio supérieur à 2,5 conduit à un abaissement de l'allongement à rupture.

Le composé ascorbate de formule générale (I) peut être tout type de composé ascorbate répondant à cette formule.

De manière préférée, la composition de caoutchouc du produit renforcé selon l'invention comprend un composé à base d'ascorbate de formule générale (II) : $[A^-]_n[R_2^{n+}]$ (II) dans laquelle $R_2$ représente un atome d'hydrogène ou un métal alcalino-terreux, n est un entier égal à 1 ou 2, et A représente un composé ascorbate de formule générale (I).

De manière préférée, $R_1$ représente un atome d'hydrogène ou un groupe choisi parmi les groupes alkyles comprenant de 1 à 5 atomes de carbone, préférentiellement de 1 à 3 atomes de carbone, les groupes alkylecarbonyles et alcényles comprenant de 2 à 5 atomes de carbone et de manière préférée de 2 à 4 atomes de carbone et les groupes alcénylcarbonyles comprenant de 3 à 5 atomes de carbone et de manière préférée de 3 à 4 atomes de carbone.

En particulier, dans un arrangement préféré, le groupement $R_1$ est préférentiellement un groupe choisi parmi les groupes alkyles comprenant de 1 à 5 atomes de carbone, préférentiellement de 1 à 3 atomes de carbone et les groupes alcényles comprenant de 2 à 5 atomes de carbone et de manière préférée de 2 à 4 atomes de carbone. Dans un autre arrangement préféré, le groupe $R_1$ est préférentiellement un groupe choisi parmi les groupes alkylecarbonyles comprenant de 2 à 5 atomes de carbone et de manière préférée de 2 à 4 atomes de carbone et les groupes alcénylcarbonyles comprenant de 3 à 5 atomes de carbone et de manière préférée de 3 à 4 atomes de carbone. Dans un autre arrangement préféré, $R_1$ représente l'atome d'hydrogène.

Le groupe $R_2$ est préférentiellement choisi parmi les métaux alcalino-terreux, et de manière préférée choisi parmi le magnésium et le calcium.

De manière préférée, le composé ascorbate est choisi parmi l'acide ascorbique, l'ascorbate de calcium et l'ascorbate de magnésium, préférentiellement parmi l'ascorbate de magnésium et l'ascorbate de calcium et de manière préférée est l'ascorbate de calcium.

Préférentiellement, la teneur en composé ascorbate de formule générale (I) dans la composition de caoutchouc est au plus de 3 pce. Il a été observé que pour une teneur en composé ascorbate inférieure à 0,5 pce, les autres

caractéristiques de l'invention étant respectées, les performances en adhésion et en allongement à rupture étaient dégradées. Une teneur supérieure à 3 pce peut impacter la processabilité des compositions avec un temps de fixation plus faible qui doit être pris en compte lors de la mise en œuvre du produit renforcé. Ainsi, une teneur en composé ascorbate de formule générale (I) comprise dans un domaine allant de 0,5 à 3 pce, préférentiellement allant de 1 à 3 pce représente un excellent compromis entre les propriétés à cru, c'est-à-dire avant réticulation, et les propriétés à cuit.

La composition de caoutchouc du produit renforcé selon l'invention comprend de préférence, en outre, un oxyde ou hydroxyde d'un métal alcalino-terreux, préférentiellement un oxyde d'un métal alcalino-terreux. Le métal alcalino-terreux compris dans la composition de caoutchouc du produit renforcé selon l'invention provient à la fois du composé à base d'ascorbate de formule générale (II) lorsque le groupe $R_2$ est choisi parmi les métaux alcalino-terreux et de l'oxyde ou hydroxyde de métal alcalino-terreux lorsque celui-ci est présent dans la composition de caoutchouc.

Dans un arrangement préféré, la composition de caoutchouc du produit renforcé selon l'invention comprend de l'acide ascorbique et un oxyde de métal alcalino-terreux, de préférence choisi parmi l'oxyde de calcium et l'oxyde de magnésium, et de manière préférée étant l'oxyde de magnésium, ces associations montrant des performances particulièrement avantageuses.

Dans un autre arrangement préféré, la composition de caoutchouc du produit renforcé selon l'invention comprend de l'ascorbate de calcium et de l'oxyde de magnésium.

De manière préférée, l'oxyde d'un métal alcalino-terreux est choisi parmi l'oxyde de magnésium, l'oxyde de calcium et le mélange de ces oxydes.

De manière préférée, le métal alcalino-terreux compris dans la composition de caoutchouc du produit renforcé selon l'invention est choisi parmi le calcium et le magnésium.

Élastomère diénique

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type **EPDM** n'entrent pas dans la définition précédente et peuvent être notamment qualifiés d'élastomères diéniques "essentiellement saturés" (taux de motifs d'origine diénique faible ou très faible, toujours inférieur à 15% en moles). Les élastomères diéniques compris dans la composition selon l'invention sont préférentiellement essentiellement insaturés.

On entend particulièrement par élastomère diénique susceptible d'être utilisé dans les compositions conformes à l'invention :

(a) tout homopolymère d'un monomère diène conjugué ou non ayant de 4 à 18 atomes de carbone ;
(b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

À titre de diènes conjugués conviennent les diènes conjugués ayant de 4 à 12 atomes de carbone, en particulier les 1,3-diènes, tels que notamment le 1,3-butadiène et l'isoprène.

À titre d'oléfines conviennent les composés vinylaromatiques ayant de 8 à 20 atomes de carbone et les $\alpha$-monooléfines aliphatiques ayant de 3 à 12 atomes de carbone.

À titre de composés vinylaromatiques conviennent par exemple le styrène, l'ortho-, méta-, para-méthylstyrène, le mélange commercial "vinyle-toluène", le para-tertiobutylstyrène.

Ã titred'$\alpha$-monooléfines aliphatiques conviennent notamment les $\alpha$-monooléfines aliphatiques acycliques ayant de 3 à 18 atomes de carbone.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

De manière préférée, l'élastomère diénique est un élastomère isoprénique.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères

d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence choisi dans le groupe constitué par le caoutchouc naturel, les polyisoprènes cis-1,4 de synthèse et leurs mélanges ; parmi ces polyisoprènes de synthèse, sont utilisés de préférence des polyisoprènes ayant un taux (% molaire) de liaisons cis-1,4 supérieur à 90%, plus préférentiellement encore supérieur à 98%. De manière préférée et selon l'un quelconque des arrangements de la présente, l'élastomère diénique est le caoutchouc naturel.

Préférentiellement le taux d'élastomère diénique, de préférence d'élastomère isoprénique, de préférence le caoutchouc naturel, est de 50 à 100 pce, de manière plus préférentielle de 70 à 100 pce, plus préférentiellement encore de 80 à 100 pce et de manière très préférentielle de 90 à 100 pce. En particulier le taux d'élastomère diénique, de préférence d'élastomère isoprénique, de préférence encore de caoutchouc naturel, est très préférentiellement de 100 pce.

Qu'elle contienne un seul élastomère diénique ou un mélange de plusieurs élastomères diéniques, la composition de caoutchouc selon l'invention peut également contenir de manière minoritaire tout type d'élastomère synthétique autre que diénique, voire des polymères autres que des élastomères, par exemple des polymères thermoplastiques. De préférence, la composition de caoutchouc selon l'invention ne contient pas d'élastomère synthétique autre que diénique ni de polymère autre que des élastomères ou en contient moins de 20 pce, de préférence moins de 15 pce.

Système de réticulation

La composition de caoutchouc du produit renforcé selon l'invention comprend un système de réticulation à base de soufre. On parle alors d'un système de vulcanisation.

Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5 pce et très préférentiellement compris entre 0,5 et 3 pce.

De manière préférée, la composition de caoutchouc du produit renforcé selon l'invention comprend au moins 3 pce d'oxyde de zinc, et préférentiellement au moins 5 pce d'oxyde de zinc. Préférentiellement, la composition de caoutchouc du produit renforcé selon l'invention comprend au plus 15 pce d'oxyde de zinc, et préférentiellement au plus 12 pce d'oxyde de zinc.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

Charge renforçante

La composition de caoutchouc comprend une ou plusieurs charges renforçantes.

On peut utiliser tout type de charge dite renforçante, connue pour ses capacités à renforcer une composition de caoutchouc utilisable notamment pour la fabrication de pneumatiques, par exemple une charge organique telle que du noir de carbone, une charge inorganique telle que de la silice ou encore un mélange de ces deux types de charges.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous toute autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1). Conviennent également les noirs de carbone issus du recyclage de pneumatiques tels que les noirs issus de pyrolyse de bandages pneumatiques, comme par exemple le noir Enviro CB P550 de série 500 produit par la société Scandinavian Enviro Systems.

Comme exemple de charges organiques autres que des noirs de carbone, on peut citer les charges organiques de polyvinyle fonctionnalisé telles que décrites dans les demandes WO2006/069792-A1, WO2006/069793-A1,

WO2008/003434-A1 et WO2008/003435-A1.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice ($SiO_2$) ou du type alumineux, en particulier l'alumine ($Al_2O_3$). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2/g$, de préférence comprises dans un domaine allant de 30 à 400 $m^2/g$, notamment de 60 à 300 $m^2/g$. On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG et « K-160 » de la société Wilmar.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

Pour les noirs de carbone, la surface spécifique STSA est déterminée selon la norme ASTM D6556-2016.

À titre d'autres exemples de charges inorganiques susceptibles d'être utilisées dans les compositions de caoutchouc de l'invention peuvent être encore cités les charges minérales du type alumineux, en particulier de l'alumine ($Al_2O_3$), des oxydes d'aluminium, des hydroxydes d'aluminium, des aluminosilicates, des oxydes de titane, des carbures ou nitrures de silicium, tous du type renforçants tels que décrits par exemple dans les demandes WO99/28376-A2, WO00/73372-A1, WO02/053634-A1, WO2004/003067-A1, WO2004/056915-A2, US6610261-B1 et US6747087-B2. On peut citer notamment les alumines « Baikalox A125 » ou « CR125 » (société Baïkowski), « APA-100RDX » (Condéa), « Aluminoxid C » (Evonik) ou « AKP-G015 » (Sumitomo Chemicals).

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier saura adapter le taux de charge renforçante total selon l'utilisation concernée, notamment selon le type de pneumatiques concerné, par exemple pneumatique pour moto, pour véhicule de tourisme ou encore pour véhicule utilitaire tel que camionnette ou poids lourd. De manière préférentielle, le taux de charge renforçante total (noir de carbone et/ou charge inorganique renforçante telle que silice) est compris entre 10 et 200 pce, plus préférentiellement entre 25 et 180 pce, l'optimum étant de manière connue différent selon les applications particulières visées.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique.

Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé

sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

La teneur en agent de couplage dans la composition de l'invention est préférentiellement inférieure ou égale à 35 pce, étant entendu qu'il est en général souhaitable d'en utiliser le moins possible. Typiquement le taux d'agent de couplage représente de 0,5% à 15% en poids par rapport à la quantité de charge inorganique renforçante, préférentiellement de 5 à 15% en poids. Son taux est préférentiellement compris dans un domaine allant de 0,5 à 20 pce, plus préférentiellement compris dans un domaine allant de 3 à 10 pce. Ce taux est aisément ajusté par l'homme du métier selon le taux de charge inorganique renforçante utilisé dans la composition de l'invention.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack® » de la série CRX2000 » ou de la série « CRX4000 » de la société Cabot Corporation.

Additifs

Les compositions de caoutchouc du produit renforcé conforme à l'invention peuvent comporter également tout ou partie des additifs et agents de mise en œuvre usuels, connus de l'homme de l'art et habituellement utilisés dans les compositions de caoutchouc pour bandages pneumatiques, comme par exemple des plastifiants (tels que des huiles plastifiantes et/ou des résines plastifiantes), des charges (renforçantes ou non renforçantes / autres que celles précitées telles que par exemple des poudrettes régénérées ou dévulcanisées issues du recyclage de bandages pneumatiques), des pigments, des agents de protection tels que cires anti-ozone, anti-ozonants chimiques, anti-oxydants, des agents anti-fatigue, des résines renforçantes (telles que décrites par exemple dans la demande WO 02/10269), un système de réticulation, par exemple à base de soufre et autres agents de vulcanisation, et/ou de peroxyde et/ou de bismaléimide.

L'utilisation d'un composé ascorbate et d'un métal alcalino-terreux dans les conditions de l'invention permet de minimiser la quantité de sels de cobalt présents dans la composition de caoutchouc du produit renforcée. Ainsi, dans un arrangement préféré, la teneur en sels de cobalt dans la composition de caoutchouc du produit renforcé selon l'invention est comprise dans un domaine allant de 0,5 à 2 pce, de préférence de 0,5 à 1 pce.

Elément de renfort

Le produit renforcé selon l'invention est à base d'au moins un élément de renfort métallique et d'une composition de caoutchouc.

Par l'expression "à base au moins d'un élément de renfort métallique et d'une composition de caoutchouc", il faut entendre un produit renforcé comprenant l'élément de renfort et ladite composition, la composition ayant pu réagir avec la surface de l'élément de renfort lors des différentes phases de fabrication du produit renforcé, en particulier au cours de la réticulation de la composition ou au cours de la confection du produit renforcé avant réticulation de la composition.

Ledit élément de renfort métallique est un élément filaire. Il peut être tout ou partie métallique.

Dans un arrangement particulier, ledit élément de renfort comprend une surface métallique.

La surface métallique de l'élément de renfort constitue au moins une partie, et préférentiellement la totalité de la surface dudit élément et est destinée à entrer directement au contact de la composition de caoutchouc. De préférence, l'élément de renfort est métallique, c'est-à-dire constitué d'un matériau métallique.

La composition de caoutchouc enrobe au moins une partie de l'élément de renfort, préférentiellement la totalité dudit élément.

Selon une première variante de l'invention, la surface métallique de l'élément de renfort est faite d'un matériau différent du restant de l'élément de renfort. Autrement dit, l'élément de renfort est fait d'un matériau qui est au moins en partie, préférentiellement totalement, recouvert par une couche métallique qui constitue la surface métallique. Le matériau au moins en partie, préférentiellement totalement, recouvert par la surface métallique est de nature métallique ou non métallique, de préférence métallique.

Selon une deuxième variante de l'invention, l'élément de renfort est fait d'un même matériau, auquel cas l'élément de renfort est fait d'un métal qui est identique au métal de la surface métallique.

La surface métallique peut permettre d'améliorer par exemple les propriétés de mise en œuvre de l'élément de renfort, ou les propriétés d'usage du produit renforcé et/ou du bandage pneumatique eux-mêmes, telles que les propriétés d'adhésion, de résistance à la corrosion ou encore de résistance au vieillissement.

Selon un mode de réalisation de l'invention, la surface métallique comprend un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, le métal de la surface métallique est le fer, le cuivre, l'étain, le zinc ou un alliage comportant au moins un de ces métaux. De manière plus préférentielle, le métal de la surface métallique est l'acier, le laiton (alliage Cu-Zn), le zinc ou le bronze (alliage Cu-Sn), de manière encore plus préférée le laiton ou l'acier, et de manière très préférée le laiton.

Certains métaux étant sujets à l'oxydation au contact de l'air ambiant, le métal peut être en partie oxydé.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

L'invention s'applique en particulier à des aciers du type *steel cord* à résistance normale (dit "NT" *pour " Normal Tensile* ") ou à haute résistance (dit "HT" pour " *High Tensile* "), les (deuxièmes et troisièmes) renforts en acier au carbone possédant alors une résistance en traction (Rm) qui est de préférence supérieure à 2000 MPa, plus préférentiellement supérieure à 2500 MPa. L'invention s'applique également à des aciers du type *steel cord à* très haute résistance (dit "SHT" *pour " Super High Tensile* "), ultra-haute résistance (dit "UHT" pour *"Ultra High Tensile* "ou "MT" pour *"Mega Tensile* "), les (deuxièmes et troisièmes) renforts en acier au carbone possédant alors une résistance en traction (Rm) qui est de préférence supérieure à 3000 MPa, plus préférentiellement supérieure à 3500 MPa. L'allongement total à la rupture (At) de ces renforts, somme de l'allongement élastique et de l'allongement plastique, est de préférence supérieur à 2,0%.

Les mesures de force à la rupture, de résistance à la rupture notée Rm (en MPa) et d'allongement à la rupture noté At (allongement total en %) sont effectuées en traction selon la norme ISO 6892 de 1984.

Selon un mode de réalisation préféré, le produit renforcé selon l'invention comprend plusieurs éléments de renforcement tels que définis ci-dessus et une gomme de calandrage dans laquelle sont noyés les éléments de renforcement, la gomme de calandrage consistant en la composition de caoutchouc du produit renforcé selon l'invention. Selon ce mode de réalisation, les éléments de renforcement sont agencés généralement côte à côte selon une direction principale. Pour une application envisagée dans le pneumatique, le produit renforcé selon l'invention peut donc constituer une armature de renforcement pour pneumatique.

Le produit renforcé selon l'invention peut être à l'état cru (avant réticulation de la composition de caoutchouc) ou à l'état cuit (après réticulation de la composition de caoutchouc). Le produit renforcé selon l'invention est cuit après mise en contact du ou des éléments de renfort avec la composition de caoutchouc.

Le produit renforcé selon l'invention peut être fabriqué par un procédé qui comprend les étapes suivantes :

- Réaliser deux couches de la composition de caoutchouc,
- Prendre le ou les éléments de renfort en sandwich dans les deux couches en le(s) déposant entre les deux couches,
- Le cas échéant cuire le produit renforcé selon l'invention.

Alternativement, le produit renforcé selon l'invention peut être fabriqué en déposant l'élément de renfort sur une portion d'une couche, la couche est alors repliée sur elle-même pour couvrir l'élément de renfort qui est ainsi pris en sandwich sur toute sa longueur ou une partie de sa longueur.

La réalisation des couches peut se faire par calandrage. Au cours de la cuisson du produit renforcé selon l'invention, la composition de caoutchouc est réticulée.

Lorsque le produit renforcé selon l'invention est destiné à être utilisé en tant qu'armature de renforcement dans un bandage pneumatique, la cuisson du produit renforcé selon l'invention a lieu généralement lors de la cuisson du bandage.

**Article fini ou semi-fini et pneumatique**

L'invention a également pour objet un article fini ou semi-fini comprenant un produit renforcé selon l'invention. L'article fini ou semi-fini peut être tout article comprenant un produit renforcé. On peut citer par exemple et de manière non limitative les ballons, bandes transporteuses, semelles de chaussures, bandages pneumatiques ou non pneumatiques.

Le bandage pneumatique ou non pneumatique, autre objet de l'invention, a pour caractéristique essentielle de comprendre le produit renforcé conforme à l'invention. Le bandage peut être à l'état cru (avant réticulation de la composition de caoutchouc) ou à l'état cuit (après réticulation de la composition de caoutchouc). Généralement, au cours de la fabrication du bandage, le produit renforcé est déposé à l'état cru (c'est-à-dire avant réticulation de la composition de caoutchouc) dans la structure du bandage avant l'étape de cuisson du bandage.

Le bandage selon l'invention comprend une couche renforcée constituée d'un produit renforcé selon l'invention préférentiellement choisie parmi les nappes carcasse, les nappes sommet, les bourrages-tringle et les combinaisons de ces couches renforcées. Par ailleurs, la composition de caoutchouc du produit renforcé selon l'invention pourrait être

utilisée comme couche interne dans un bandage pneumatique ou non pneumatique, une couche interne étant une couche du bandage qui n'est ni en contact avec l'air ambiant, ni en contact avec le gaz de gonflages. De telles couches internes sont par exemple les couches pied-sommet, les couches de découplage, les gommes de bordures et les combinaisons de ces couches internes. Dans la présente, on entend par « gomme de bordure », une couche positionnée dans le bandage directement au contact de l'extrémité d'une couche renforcée, de l'extrémité d'un élément de renfort ou d'une autre gomme de bordure.

L'invention concerne particulièrement des bandages destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

Ainsi, l'invention concerne en particulier un bandage pneumatique ou non pneumatique comprenant un sommet comprenant une armature de sommet formée de deux nappes de sommet d'éléments de renfort et surmontée d'une bande de roulement, deux bourrelets destinés à venir en contact avec une jante comprenant chacun un élément de renforcement circonférentiel et deux flancs prolongeant chacun radialement vers l'intérieur une extrémité axiale du sommet jusqu'aux bourrelets, ledit bandage comportant en outre une armature de carcasse ancrée à chacun des bourrelets et s'étendant depuis les bourrelets à travers les flancs vers le sommet, au moins une des deux nappes de sommet d'éléments de renfort étant constituée par un produit renforcé selon l'invention.

## Exemples

### Préparation des compositions de caoutchouc

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur (sulfénamide), sur un mélangeur (homo-finisseur) à 30 °C, en mélangeant le tout (phase productive) pendant un temps approprié (par exemple entre 5 et 12 min).

Les compositions ainsi obtenues sont ensuite calandrées sous la forme de plaques (épaisseur de 2 à 3 mm) ou de feuilles fines de caoutchouc puis sont soumises à une étape de cuisson à 150°C pendant 25 min avant la mesure de leurs propriétés physiques ou mécaniques.

### Méthodes de mesures

### Essais de traction

Ces essais de traction permettent de déterminer les contraintes d'élasticité et les propriétés à la rupture des compositions de gomme. Les essais ont été effectués conformément à la norme française NF T 46-002 de septembre 1988. Les allongements à la rupture (en %) sont mesurés à 100°C.

Les résultats sont exprimés en base 100, la valeur 100 étant attribuée à la composition témoin T1. Un résultat supérieur à 100, indique que la composition de l'exemple considéré présente un plus fort allongement à la rupture que le témoin.

### Test d'adhésion

<u>Préparation des éprouvettes</u>

Les compositions de caoutchouc ainsi préparées sont utilisées pour confectionner un composite sous la forme d'une éprouvette selon le protocole suivant.

Le composite métal/ caoutchouc utilisé dans ce test est un bloc de composition de caoutchouc, constitué de deux plaques de dimension 200 mm par 12,5 mm (millimètres) et d'épaisseur 3,5 mm, appliquées l'une sur l'autre avant la cuisson ; l'épaisseur du bloc résultant est alors de 7 mm. C'est lors de la confection de ce bloc que les renforts, par exemple au nombre de douze, sont emprisonnés entre les deux plaques crues ; seule une longueur de renfort déterminée, par exemple de 12,5 mm, est laissée libre pour venir au contact de la composition de caoutchouc à laquelle cette longueur de renfort se liera pendant la cuisson ; le reste de la longueur des renforts est isolé de la composition de caoutchouc (par exemple à l'aide d'un film plastique ou métallique) pour empêcher toute adhésion en dehors de la zone de contact

déterminée. Chaque renfort traverse le bloc de caoutchouc de part en part, au moins une de ses extrémités libres étant conservée de longueur suffisante (au moins 5 cm, par exemple entre 5 et 10 cm) pour permettre la traction ultérieure du renfort.

Chaque renfort métallique est constitué de 2 fils d'acier à 0,7% de carbone, de 30/100è millimètres de diamètre retordus ensemble, le revêtement en laiton comprend 63% de cuivre.

Le bloc comportant les douze renforts est alors placé dans un moule adapté puis cuit pendant 15 minutes à 160°C, sous une pression d'environ 11 bar.

Après cuisson du bloc, on applique les conditions de vieillissement accéléré qui suivent, permettant de déterminer la résistance des échantillons à l'action combinée de la chaleur et de l'humidité : les blocs de caoutchouc sont placés dans une étuve à une température de 55°C, pendant 28 jours et sous une humidité relative de 95%.

<u>Mesure des forces d'arrachement</u>

A l'issue de la cuisson et du vieillissement décrit ci-dessus, le bloc est découpé en éprouvettes servant d'échantillons, contenant chacune un renfort que l'on tractionne hors du bloc de caoutchouc, à l'aide d'une machine de traction selon la méthode décrite dans la norme ASTM D 2229-02 ; la vitesse de traction est de 100 mm/min ; on caractérise ainsi l'adhérence par la force nécessaire pour arracher le renfort hors de l'éprouvette, à une température de 60°C ; la force d'arrachement représente la moyenne des 15 mesures correspondant aux 15 renforts du composite.

Plus la valeur de la force est élevée plus l'adhésion entre le câble et la composition de caoutchouc est grande. Les résultats sont exprimés en base 100 par rapport à une éprouvette témoin qui contient des renforts métalliques de nature identique à l'éprouvette testée et qui contient la composition de caoutchouc « T1 ». Une valeur supérieure à celle de l'éprouvette témoin, arbitrairement fixée à 100, indique un résultat amélioré, c'est-à-dire une force d'arrachement supérieure à celle de l'éprouvette témoin.

**Test de résistance** à **la propagation des fissures**

La vitesse de fissuration a été mesurée sur des éprouvettes des compositions de caoutchouc T-1 à T-19, à l'aide d'une machine de fatigue cyclique (« Elastomer Test System ») du type 381, de la société MTS, comme expliqué ci-après.

La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, par exemple d'épaisseur comprise entre 1 et 2 mm, de longueur entre 130 et 170 mm et de largeur entre 10 et 15 mm, les deux bords latéraux étant chacun recouvert dans le sens de la longueur d'un bourrelet de caoutchouc cylindrique (diamètre 5 mm) permettant l'ancrage dans les mors de la machine de traction. Les éprouvettes ainsi préparées sont testées après vieillissement accéléré à 77 °C pendant 14 jours dans une enceinte ventilée. Le test a été conduit à l'air, à une température de 60°C. Après accommodation, 3 entailles très fines de longueur comprise entre 15 et 20 mm sont réalisées à l'aide d'une lame de rasoir, à mi-largeur et alignées dans le sens de la longueur de l'éprouvette, une à chaque extrémité et une au centre de cette dernière, avant le démarrage du test. A chaque cycle de traction, le taux de déformation de l'éprouvette est ajusté automatiquement de manière à maintenir constant le taux de restitution d'énergie (quantité d'énergie libérée lors de la progression de la fissure), à une valeur égale à environ 1000 J/m2. La vitesse de propagation de fissure est mesurée et exprimée en nanomètre par cycle. Bien entendu, une valeur plus faible indique une meilleure résistance à la propagation de fissure.

Les résultats sont exprimés en base 100 par rapport à la composition de caoutchouc témoin T1. Une valeur inférieure à celle de l'éprouvette témoin indique un résultat amélioré, c'est-à-dire une vitesse de propagation de fissure inférieure à celle de l'éprouvette témoin.

**Mesure du temps de grillage**

Les mesures sont effectuées à 130°C sur composition de caoutchouc crue, c'est-à-dire avant cuisson, ou réticulation, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM ou Unité Mooney, avec 1 UM = 0,83 Newton.mètre) de 5 unités au-dessus de la valeur minimale mesurée pour cet indice.

Les résultats sont exprimés en base 100 par rapport à la composition de caoutchouc témoin T1. Une valeur inférieure à celle de l'éprouvette témoin indique un temps de grillage plus faible que l'éprouvette témoin.

Les compositions des différentes éprouvettes testées et les résultats obtenus sont présentés dans le tableau 1.

On observe que seules les éprouvettes conformes à l'invention présentent à la fois une meilleure adhésion sur le renfort métallique avec des forces d'arrachement supérieures au témoin, tout en présentant un allongement à rupture

préservé et une résistance à la fissuration améliorée.

[Tableau 1]

| | T1 | T2 | T3 | T4 | T5 | T6 | T7 | T8 | T9 | T10 | T11 | T12 | T13 | T14 | T15 | T16 | T17 | T18 | T19 |
|---|---|---|---|---|---|---|---|---|---|---|---|---|---|---|---|---|---|---|---|
| Elastomère diénique | 100 | 100 | 100 | 100 | 100 | 100 | 100 | 100 | 100 | 100 | 100 | 100 | 100 | 100 | 100 | 100 | 100 | 100 | 100 |
| Noir de Carbone | 65 | 65 | 65 | 65 | 65 | 65 | 65 | 65 | 65 | 65 | 65 | 65 | 65 | 65 | 65 | 65 | 65 | 65 | 65 |
| 6-PPD | 2 | 2 | 2 | 2 | 2 | 2 | 2 | 2 | 2 | 2 | 2 | 2 | 2 | 2 | 2 | 2 | 2 | 2 | 2 |
| Acide stéarique | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| ZNO | 8 | 8 | 8 | 8 | 8 | 8 | 8 | 8 | 8 | 8 | 8 | 8 | 8 | 8 | 8 | 8 | 8 | 8 | 8 |
| Sels de Cobalt | 1 | 1 | 1 | 1 | 1 | 1 | 1 | 1 | 1 | 1 | 1 | 1 | 1 | 1 | 1 | 1 | 1 | 1 | 1 |
| CTP | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Soufre insoluble | 6 | 6 | 6 | 6 | 6 | 6 | 6 | 6 | 6 | 6 | 6 | 6 | 6 | 6 | 6 | 6 | 6 | 6 | 6 |
| TBBS | 1 | 1 | 1 | 1 | 1 | 1 | 1 | 1 | 1 | 1 | 1 | 1 | 1 | 1 | 1 | 1 | 1 | 1 | 1 |
| Oxyde de magnésium | | 0.14 | 0.26 | 0.56 | | | | 0.56 | | 0.14 | | | 0.26 | 0.56 | 0.26 | | | | |
| Acide L-Ascorbique | | | | | 0.61 | 1.23 | 2.46 | 1.23 | | 2.46 | | | 1.23 | 2.46 | 2.46 | | | | |
| Ascorbate de magnésium | | | | | | | | | 0.50 | | | | | | | 2.60 | | 4.50 | 3.50 |
| Ascorbate de calcium | | | | | | | | | | | | | | | | | 3.00 | | |
| Citrate de magnésium | | | | | | | | | | | 1.74 | | | | | | | | |
| Ascorbate de sodium | | | | | | | | | | | | 1.39 | | | | | | | |
| Ratio molaire Ascorbate sur métal alcalino-terreux | - | - | - | - | - | - | - | 0.5 | 2.0 | 4.0 | - | - | 1.0 | 1.0 | 2.0 | 2.0 | 2.0 | 2.0 | 2.0 |
| Résultats - base 100 | | | | | | | | | | | | | | | | | | | |
| Force arrachement (60°C) | 100 | 101 | 104 | 102 | 128 | 146 | 145 | 122 | 110 | 147 | 95 | 136 | 138 | 140 | 137 | 149 | 160 | 159 | 153 |
| Fissuration (60°C) | 100 | 30 | 16 | 2 | 41 | 31 | 31 | 1 | 64 | 9 | 148 | 56 | 12 | 1 | 7 | 23 | 0 | 3 | 13 |
| Allongement à rupture, (100°C) | 100 | 103 | 109 | 119 | 85 | 81 | 92 | 104 | 92 | 91 | 81 | 71 | 95 | 97 | 97 | 96 | 104 | 99 | 95 |
| Temps Grillage (130°C) | 100 | 89 | 84 | 83 | 93 | 84 | 72 | 83 | 100 | 78 | 99 | 98 | 67 | 87 | 76 | 83 | 72 | 51 | 63 |

## Revendications

1. Produit renforcé à base d'au moins un élément de renfort métallique et d'une composition de caoutchouc à base d'au moins un élastomère diénique, une charge renforçante et un système de réticulation à base de soufre, la composition de caoutchouc comprenant au moins un métal alcalino-terreux et un composé ascorbate de formule générale (I) :

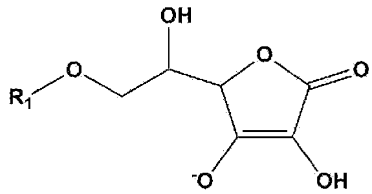 (I)

dans laquelle $R_1$ représente un atome d'hydrogène H, ou un groupe choisi parmi les groupes alkyles comprenant de 1 à 18 atomes de carbone, les groupes alkylecarbonyles et alcényles comprenant de 2 à 18 atomes de carbone, et les groupes alcénylcarbonyles comprenant de 3 à 18 atomes de carbone, la composition de caoutchouc présentant une teneur en composé ascorbate au moins égale 0,5 pce et un ratio molaire composé ascorbate sur métal alcalino-terreux allant de 0,7 à 2,5.

2. Produit renforcé selon la revendication précédente dans lequel la composition de caoutchouc comprend un composé à base d'ascorbate de formule générale (II) : $[A^{-}]_n[R_2^{n+}]$ (II) dans laquelle $R_2$ représente un atome d'hydrogène ou un métal alcalino-terreux, n est un entier égal à 1 ou 2, et A représente un composé ascorbate de formule générale (I).

3. Produit renforcé selon l'une quelconque des revendications précédentes dans lequel $R_1$ représente un atome d'hydrogène ou un groupe choisi parmi les groupes alkyles comprenant de 1 à 5 atomes de carbone, préférentiellement de 1 à 3 atomes de carbone, les groupes alkylecarbonyles et alcényles comprenant de 2 à 5 atomes de carbone et de manière préférée de 2 à 4 atomes de carbone et les groupes alcénylcarbonyles comprenant de 3 à 5 atomes de carbone et de manière préférée de 3 à 4 atomes de carbone.

4. Produit renforcé selon l'une quelconque des revendications précédentes dans lequel $R_1$ représente un groupe choisi parmi les groupes alkyles, alcényles, alkylecarbonyles et alcénylcarbonyles linéaire.

5. Produit renforcé selon la revendication 1 ou 2 dans lequel $R_1$ représente un atome d'hydrogène.

6. Produit renforcé selon l'une quelconque des revendications 2 à 5 dans lequel $R_2$ est choisi parmi les métaux alcalino-terreux, préférentiellement choisi parmi le magnésium et le calcium.

7. Produit renforcé selon la revendication 1 dans lequel le composé ascorbate est choisi parmi l'acide ascorbique, l'ascorbate de calcium et l'ascorbate de magnésium, préférentiellement choisi parmi l'ascorbate de magnésium et l'ascorbate de calcium et de manière préférée est l'ascorbate de calcium.

8. Produit renforcé selon l'une quelconque des revendications précédentes dans lequel la composition de caoutchouc comprend en outre un oxyde ou hydroxyde d'un métal alcalino-terreux, préférentiellement un oxyde d'un métal alcalino-terreux.

9. Produit renforcé selon la revendication précédente dans lequel l'oxyde d'un métal alcalino-terreux est choisi parmi l'oxyde de magnésium, l'oxyde de calcium et le mélange de ces oxydes.

10. Produit renforcé selon la revendication 1 dans lequel la composition de caoutchouc comprend de l'acide ascorbique et un oxyde de métal alcalino-terreux, de préférence choisi parmi l'oxyde de calcium et l'oxyde de magnésium, et de manière préférée étant l'oxyde de magnésium.

11. Produit renforcé selon l'une quelconque des revendications précédentes, dans lequel la teneur en composé ascorbate de formule générale (I) dans la composition de caoutchouc est au plus de 3 pce, et de préférence compris dans le domaine allant de 1 à 3 pce.

12. Produit renforcé selon l'une quelconque des revendications précédentes dans lequel la charge renforçante de la composition de caoutchouc comprend du noir de carbone, de la silice ou un mélange de noir de carbone et de silice.

13. Produit renforcé selon l'une quelconque des revendications précédentes dans lequel la composition de caoutchouc comprend un élastomère diénique choisi dans le groupe constitué par les polybutadiènes, le caoutchouc naturel, les polyisoprènes de synthèse, les copolymères de butadiène, les copolymères d'isoprène, et les mélanges de ces élastomères.

14. Article fini ou semi-fini comprenant un produit renforcé selon l'une quelconque des revendications 1 à 13.

15. Bandage pneumatique ou non pneumatique comprenant un produit renforcé selon l'une des revendications 1 à 13.

**Patentansprüche**

1. Verstärktes Produkt auf Basis von mindestens einem metallischen Verstärkungselement und einer Kautschukzusammensetzung auf Basis von mindestens einem Dienelastomer, einem verstärkenden Füllstoff und einem Vernetzungssystem auf Basis von Schwefel, wobei die Kautschukzusammensetzung mindestens ein Erdalkalimetall und eine Ascorbatverbindung der allgemeinen Formel (I) umfasst:

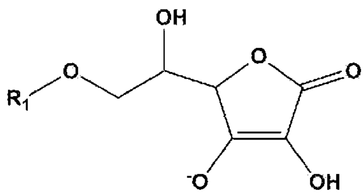

(I)

in der $R_1$ für ein Wasserstoffatom H oder eine Gruppe, die aus Alkylgruppen mit 1 bis 18 Kohlenstoffatomen, Alkylcarbonyl- und Alkenylgruppen mit 2 bis 18 Kohlenstoffatomen und Alkenylcarbonylgruppen mit 3 bis 18 Kohlenstoffatomen ausgewählt ist, steht, wobei die Kautschukzusammensetzung einen Gehalt an Ascorbatverbindung von mindestens 0,5 phe und ein Molverhältnis von Ascorbatverbindung zu Erdalkalimetall im Bereich von 0,7 bis 2,5 aufweist.

2. Verstärktes Produkt nach dem vorhergehenden Anspruch, wobei die Kautschukzusammensetzung eine Verbindung auf Basis von Ascorbat der allgemeinen Formel (II) umfasst: $[A^-]_n[R_2^{n+}]$ (II) in der $R_2$ für ein Wasserstoffatom oder ein Erdalkalimetall steht, n eine ganze Zahl mit einem Wert von 1 oder 2 ist und A für eine Ascorbatverbindung der allgemeinen Formel (I) steht.

3. Verstärktes Produkt nach einem der vorhergehenden Ansprüche, wobei $R_1$ für ein Wasserstoffatom oder eine Gruppe, die aus Alkylgruppen mit 1 bis 5 Kohlenstoffatomen, bevorzugt 1 bis 3 Kohlenstoffatomen, Alkylcarbonyl- und Alkenylgruppen mit 2 bis 5 Kohlenstoffatomen und vorzugsweise 2 bis 4 Kohlenstoffatomen und Alkenylcarbonylgruppen mit 3 bis 5 Kohlenstoffatomen und vorzugsweise 3 bis 4 Kohlenstoffatomen ausgewählt ist, steht.

4. Verstärktes Produkt nach einem der vorhergehenden Ansprüche, wobei $R_1$ für eine Gruppe steht, die aus linearen Alkyl-, Alkenyl-, Alkylcarbonyl- und Alkenylcarbonylgruppen ausgewählt ist.

5. Verstärktes Produkt nach Anspruch 1 oder 2, wobei $R_1$ für ein Wasserstoffatom steht.

6. Verstärktes Produkt nach einem der Ansprüche 2 bis 5, wobei $R_2$ aus Erdalkalimetallen ausgewählt ist und bevorzugt aus Magnesium und Calcium ausgewählt ist.

7. Verstärktes Produkt nach Anspruch 1, bei dem die Ascorbatverbindung aus Ascorbinsäure, Calciumascorbat und Magnesiumascorbat ausgewählt ist, bevorzugt aus Magnesiumascorbat und Calciumascorbat ausgewählt ist und vorzugsweise Calciumascorbat ist.

8. Verstärktes Produkt nach einem der vorhergehenden Ansprüche, wobei die Kautschukzusammensetzung außerdem ein Oxid oder Hydroxid eines Erdalkalimetalls, bevorzugt ein Oxid eines Erdalkalimetalls, umfasst.

**9.** Verstärktes Produkt nach dem vorangehenden Anspruch, wobei das Oxid eines Erdalkalimetalls aus Magnesiumoxid, Calciumoxid und der Mischung dieser Oxide ausgewählt ist.

**10.** Verstärktes Produkt nach Anspruch 1, wobei die Kautschukzusammensetzung Ascorbinsäure und ein Erdalkalimetalloxid, das vorzugsweise aus Calciumoxid und Magnesiumoxid ausgewählt ist und vorzugsweise Magnesiumoxid ist, umfasst.

**11.** Verstärktes Produkt nach einem der vorhergehenden Ansprüche, wobei der Gehalt an Ascorbatverbindung der allgemeinen Formel (I) in der Kautschukzusammensetzung höchstens 3 phe beträgt und vorzugsweise im Bereich von 1 bis 3 phe liegt.

**12.** Verstärktes Produkt nach einem der vorhergehenden Ansprüche, wobei der verstärkende Füllstoff der Kautschukzusammensetzung Ruß, Siliciumdioxid oder eine Mischung aus Ruß und aus Siliciumdioxid umfasst.

**13.** Verstärktes Produkt nach einem der vorhergehenden Ansprüche, wobei die Kautschukzusammensetzung ein Dienelastomer umfasst, das aus der Gruppe bestehend aus Polybutadienen, Naturkautschuk, synthetischen Polyisoprenen, Butadien-Copolymeren, Isopren-Copolymeren und Mischungen dieser Elastomere ausgewählt ist.

**14.** Erzeugnis oder Halbzeug, umfassend ein verstärktes Produkt nach einem der Ansprüche 1 bis 13.

**15.** Luftreifen oder Vollreifen, umfassend ein verstärktes Produkt nach einem der Ansprüche 1 bis 13.

## Claims

**1.** Reinforced product based on at least one metallic reinforcing element and a rubber composition based on at least one diene elastomer, a reinforcing filler and a sulfur-based crosslinking system, the rubber composition comprising at least one alkaline-earth metal and one ascorbate compound of general formula (I):

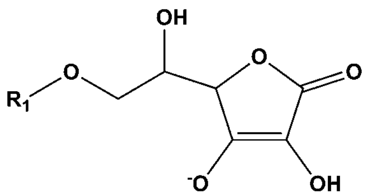 (I)

in which $R_1$ represents a hydrogen atom H, or a group selected from alkyl groups comprising from 1 to 18 carbon atoms, alkylcarbonyl and alkenyl groups comprising from 2 to 18 carbon atoms, and alkenylcarbonyl groups comprising from 3 to 18 carbon atoms, the rubber composition having a content of ascorbate compound at least equal to 0.5 phr and a molar ratio of ascorbate compound to alkaline-earth metal ranging from 0.7 to 2.5.

**2.** Reinforced product according to the preceding claim, in which the rubber composition comprises an ascorbate-based compound of general formula (II): $[A^-]_n[R_2^{n+}]$ (II) in which $R_2$ represents a hydrogen atom or an alkaline-earth metal, n is an integer equal to 1 or 2, and A represents an ascorbate compound of general formula (I).

**3.** Reinforced product according to either one of the preceding claims, in which $R_1$ represents a hydrogen atom or a group selected from alkyl groups comprising from 1 to 5 carbon atoms, preferentially from 1 to 3 carbon atoms, alkylcarbonyl and alkenyl groups comprising from 2 to 5 carbon atoms and preferably from 2 to 4 carbon atoms and alkenylcarbonyl groups comprising from 3 to 5 carbon atoms and preferably from 3 to 4 carbon atoms.

**4.** Reinforced product according to any one of the preceding claims, in which $R_1$ represents a group selected from linear alkyl, alkenyl, alkylcarbonyl and alkenylcarbonyl groups.

**5.** Reinforced product according to Claim 1 or 2, in which $R_1$ represents a hydrogen atom.

**6.** Reinforced product according to any one of Claims 2 to 5, in which $R_2$ is selected from alkaline-earth metals, preferentially selected from magnesium and calcium.

7. Reinforced product according to Claim 1, in which the ascorbate compound is selected from ascorbic acid, calcium ascorbate and magnesium ascorbate, preferentially selected from magnesium ascorbate and calcium ascorbate and preferably is calcium ascorbate.

8. Reinforced product according to any one of the preceding claims, in which the rubber composition further comprises an oxide or hydroxide of an alkaline-earth metal, preferentially an oxide of an alkaline-earth metal.

9. Reinforced product according to the preceding claim, in which the oxide of an alkaline-earth metal is selected from magnesium oxide, calcium oxide and the mixture of these oxides.

10. Reinforced product according to Claim 1, in which the rubber composition comprises ascorbic acid and an alkaline-earth metal oxide, preferably selected from calcium oxide and magnesium oxide, and preferably being magnesium oxide.

11. Reinforced product according to any one of the preceding claims, in which the content of ascorbate compound of general formula (I) in the rubber composition is at most 3 phr, and preferably within the range of from 1 to 3 phr.

12. Reinforced product according to any one of the preceding claims, in which the reinforcing filler of the rubber composition comprises carbon black, silica or a mixture of carbon black and silica.

13. Reinforced product according to any one of the preceding claims, in which the rubber composition comprises a diene elastomer selected from the group consisting of polybutadienes, natural rubber, synthetic polyisoprenes, butadiene copolymers, isoprene copolymers, and mixtures of these elastomers.

14. Finished or semi-finished article comprising a reinforced product according to any one of Claims 1 to 13.

15. Pneumatic or non-pneumatic tyre comprising a reinforced product according to one of Claims 1 to 13.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5859101 A
- EP 3167110 A
- US 3903026 A
- WO 9736724 A2
- WO 9916600 A1
- WO 2006069792 A1
- WO 2006069793 A1
- WO 2008003434 A1
- WO 2008003435 A1
- WO 03016215 A1
- WO 03016387 A1
- WO 9928376 A2
- WO 0073372 A1
- WO 02053634 A1
- WO 2004003067 A1
- WO 2004056915 A2
- US 6610261 B1
- US 6747087 B2
- WO 0210269 A


### Littérature non-brevet citée dans la description


- *The Journal of the American Chemical Society*, February 1938, vol. 60, 309